# EUROPÄISCHE PATENTSCHRIFT

(11) **EP 3 552 849 B1**
(45) Veröffentlichungstag und Bekanntmachung des Hinweises auf die Patenterteilung: **28.10.2020**
(21) Anmeldenummer: 19163581.2
(22) Anmeldetag: 19.03.2019
(51) Int. Cl.: B60C 19/00, B60C 19/12, B29C 73/16, C09J 7/38, C09J 123/20, C09J 123/22

(54) **FAHRZEUGLUFTREIFEN MIT GERÄUSCHABSORBER UND KLEBEMITTELZUSAMMENSETZUNG ZUR BEFESTIGUNG WENIGSTENS EINES GERÄUSCHABSORBERS AUF EINER FLÄCHE EINES FAHRZEUGLUFTREIFENS**
VEHICLE PNEUMATIC TIRE WITH NOISE ABSORBER AND ADHESIVE COMPOSITION FOR ATTACHING AT LEAST A NOISE ABSORBER ON A SURFACE OF A VEHICLE PNEUMATIC TIRE
PNEUMATIQUE COMPRENANT UN REDUCTEUR DE BRUIT ET COMPOSITION D'ADHESIF POUR FIXATION D'AU MOINS UN REDUCTEUR DE BRUIT A UNE SURFACE D'UN PNEUMATIQUE

(30) Priorität: 11.04.2018 DE 102018205419
(43) Veröffentlichungstag der Anmeldung: 16.10.2019
(73) Patentinhaber: Continental Reifen Deutschland GmbH, 30165 Hannover (DE)
(72) Erfinder: Doroshenko, Mikheil, 30165 Hannover (DE); Tyburski, Andreas, 30165 Hannover (DE); Tim Kee, Sherry-Ann, 30165 Hannover (DE)
(74) Vertreter: Finger, Karsten

(56) Entgegenhaltungen:
- EP-A1- 2 006 125
- WO-A1-2018/202413
- US-A- 3 850 858
- US-A1- 2016 001 612

## Beschreibung

Die Erfindung betrifft einen Fahrzeugluftreifen mit wenigstens einem in seinem Inneren an der dem Laufstreifen gegenüberliegenden Innenfläche haftend angebrachten Geräuschabsorber, wobei der wenigstens eine Geräuschabsorber an einem Klebemittel haftet, und eine Klebemittelzusammensetzung zur Befestigung wenigstens eines Geräuschabsorbers auf einer Fläche eines Fahrzeugluftreifens.

Ein eingangs genannter Fahrzeugluftreifen ist aus der DE 10 2007 028932 A1 und der WO 2015149959 A1 bekannt. Der Geräuschabsorber aus der DE 10 2007 028932 A1 ist in Form eines Schaumstoffrings ausgeführt und reduziert die Luftschwingung im Reifen und führt zu einer Verbesserung des Geräuschverhaltens im Fahrzeug. Der Schaumstoffring besteht aus offenzelligem Schaumstoff und wird auch als "Innenabsorber" bezeichnet. Das an der Reifeninnenseite nach dem Heizvorgang des Reifens nachträglich aufgebrachte Dichtmittel hat zwei Funktionen: Es dichtet einen unerwünschten Durchstich des Reifens im Bereich des Laufstreifens ab, indem das viskose Dichtmittel im Falle einer Verletzung der Innenschicht in die Stelle der Verletzung fließt. Zudem dient das Dichtmittel gleichzeitig als "Haftmittel" zum Befestigen des schallabsorbierenden Schaumstoffringes.
Das Dichtmittel kann auf Basis von Polyurethan oder einer viskosen Mischung auf Basis eines vernetzten Butylkautschukes, eines vernetzten Polybutens oder auf Basis von Silikon ausgeführt sein.
Die US 2016/0001612 A1 offenbart ein Dichtmittel zur Befestigung eines Geräuschabsorbers, wobei das Dichtmittel 20 bis 40 Gew.-% Butylkautschuk, 20 bis 30 Gew.-% Polybuten und 35 bis 50 Gew.-% Füllstoff enthält.

Allerdings ist es aufwändig ein Dichtmittel herzustellen und als Befestigung für den Geräuschabsorbers einzusetzen, wenn selbstdichtende Eigenschaften nicht oder nicht in starkem Ausmaß erforderlich sind. Eine Herausforderung besteht darin, dass die chemische Zusammensetzung des Klebemittels zur Befestigung des Geräuschabsorbers mit den anderen Reifenkomponenten verträglich sein muss und insbesondere eine geeignete Fließfähigkeit und eine ausreichende Klebrigkeit des Klebemittels gewährleistet sein müssen. Dabei sollte das Klebemittel insbesondere gegenüber den beschriebenen Dichtmitteln vergleichsweise einfach zusammengesetzt sein und eine optimierte Viskosität aufweisen. Zudem soll das Klebemittel hinsichtlich ökologischen und ökonomischen Gesichtspunkten optimiert sein.

Der vorliegenden Erfindung liegt daher die Aufgabe zugrunde, einen Fahrzeugluftreifen mit wenigstens einem in seinem Inneren an der dem Laufstreifen gegenüberliegenden Innenfläche haftend angebrachten Geräuschabsorber, wobei der Geräuschabsorber an einem Klebemittel haftet bereitzustellen, der sich auf vergleichsweise einfache und kostengünstige Weise herstellen lässt, wobei die Haftung des Geräuschabsorbers über die gesamte Lebensdauer des Reifens sichergestellt sein soll.

Gelöst wird diese Aufgabe dadurch, dass das Klebemittel wenigstens die folgenden Bestandteile enthält:
- 10 bis 80 Gew.-% wenigstens eines Kautschuks, wobei 80 bis 100 phr regenerierter Kautschuk sind, und
- 11 bis 80 Gew.-% wenigstens eines Polyolefins, und
- 2 bis 20 Gew.-% wenigstens eines Kohlenwasserstoffharzes.

Dadurch, dass das Klebemittel die genannten Substanzen in den genannten Mengen enthält, ist es vergleichsweise einfach zusammengesetzt, kompatibel mit den anderen Reifenbauteilen und weist insbesondere eine optimierte Viskosität und damit ein optimiertes Fließverhalten auf bei einer gleichzeitig sehr guten Klebrigkeit. Somit ist die Haftung des wenigstens einen Geräuschabsorbers in dem erfindungsgemäßen Fahrzeugluftreifen über die Lebensdauer des Reifens sichergestellt. Der erfindungsgemäße Fahrzeugluftreifen ist durch die Verwendung von regeneriertem Kautschuk vergleichsweise kostengünstig. Gleichzeitig trägt die Wiederverwendung von Altmaterialen (Recycling) dazu bei, ein dauerhaftes ökologisches Problem zu lösen.
Ferner lässt sich der erfindungsgemäße Fahrzeugluftreifen einfacher herstellen, da das Klebemittel durch die Verwendung von regeneriertem Kautschuk aufgrund der geringeren Elastizität im Vergleich zu Rohkautschuken besser prozessierbar ist.

"Regenerierter Kautschuk" (Regenerat oder *engl.* Reclaim) wird aus schwefelvernetzten Gummivulkanisaten durch Spaltung der Schwefelbrücken gewonnen, wobei die Kautschukmischungen durch die stattfindende Devulkanisation vom elastischen in den plastischen Zustand überführt werden (devulkanisierte Kautschukmischungen).
Verfahren zur Regenerierung von schwefelvernetzten Gummivulkanisaten unter Zuhilfenahme von verschiedenen Substanzen und in unterschiedlichen Apparaturen sind seit langem bekannt, wobei die Dampfregeneration, die mechanische Regeneration, die thermische Regeneration, die Regeneration durch Schallwellen, die Regeneration durch Strahlung und die chemische Regeneration bekannt sind.

Unter dem Ausdruck "regenerierter Kautschuk" ist prinzipiell auch die Verwendung von verschiedenen regenerierten Kautschuken umfasst, sofern nichts anderes angegeben ist oder sich nicht ein anderes ergibt.

Als Ausgangsmaterialien für den regenerierten Kautschuk sind sämtliche vulkanisierten Kautschukartikel umfasst, wie beispielsweise und bevorzugt die schwefelvernetzten Gummivulkanisate aus Altreifen oder Förderbändern oder aus bei der Produktion von technischen Kautschukartikeln oder Fahrzeugluftreifen anfallendem vulkanisiertem Abfall stammen. Hierbei findet vor dem eigentlichen Regenerierungsverfahren oft ein oder mehrere Zerkleinerungsschritte statt, wodurch vulkanisiertes Gummigranulat oder vulkanisiertes Gummipulver oder - mehl erhalten wird.

Kautschuke, die noch gar nicht vulkanisiert sind, werden im Rahmen der vorliegenden Erfindung auch als Rohkautschuke bezeichnet. Hierbei sind sämtliche dem Fachmann bekannte Formen von Rohkautschuken umfasst, wie insbesondere Rohkautschukballen oder -felle.

Die Angabe Gew.-% bezieht sich auf die Gesamtmenge an Klebemittel, also auf alle im Klebemittel enthaltenen Bestandteile, sofern nicht anders angegeben.
Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen Kautschuke bezogen, die der jeweiligen Kautschukmischung zugegeben werden. Hierbei sind regenerierte Kautschuke und Rohkautschuke umfasst.
Das oder die enthaltenen Polyolefine sowie das oder die Kohlenwasserstoffharze zählen nicht zu den Kautschuken.

Mit "Viskosität" ist im Rahmen der vorliegenden Erfindung insbesondere die komplexe Viskosität (z. B. mittels Platte-Platte-Rheometer bei einer jeweiligen Temperatur von Interesse) gemeint, sofern nichts anderes angegeben ist. Im Rahmen der vorliegenden Erfindung ist eine komplexe Viskosität bei vergleichsweise hoher Temperatur relevant, wie insbesondere bei 120 °C.

Ein weiterer Gegenstand der vorliegenden Erfindung ist eine Klebemittelzusammensetzung (auch kurz Klebemittel) zur Befestigung wenigstens eines Geräuschabsorbers auf einer Fläche eines Fahrzeugluftreifens, welches wenigstens die folgenden Bestandteile enthält:
- 10 bis 80 Gew.-% wenigstens eines Kautschuks, wobei 80 bis 100 phr regenerierter Kautschuk sind, und
- 11 bis 80 Gew.-% wenigstens eines Polyolefins, und
- 2 bis 20 Gew.-% wenigstens eines Kohlenwasserstoffharzes.

Bei der Fläche des Fahrzeugluftreifens für die das Klebemittel geeignet ist, kann es sich prinzipiell um jede Fläche handeln, auf der ein Geräuschabsorber für die Nutzung über einen längeren Zeitraum, insbesondere für eine lange Haltbarkeit im Fahrbetrieb und der Lebensdauer des Reifens, angebracht werden kann. Zweckmäßig ist es, den wenigstens einen Geräuschabsorber im Inneren des Reifens anzubringen, und zwar wie eingangs beschrieben auf der dem Laufstreifen gegenüberliegenden Innenfläche. Die Fläche kann dabei jede denkbare Größe haben und richtet sich nach der Geometrie und den Maßen des Geräuschabsorbers.

Bei dem Geräuschabsorber des erfindungsgemäßen Fahrzeugluftreifens kann es sich prinzipiell um jedes Element oder jede Kombination von Elementen handeln, welches bzw. welche in einem Fahrzeugluftreifen auf seiner Innenfläche durch Haftung angebracht werden kann/können und welches/welche die Geräuschemission des Reifens im Fahrbetrieb reduziert/reduzieren.
Gemäß einer bevorzugten Ausführungsform ist der wenigstens eine Geräuschabsorber wenigstens ein poröses Dämpfungselement. Poröse Materialien weisen insbesondere den Vorteil auf, dass sie neben der Geräuschabsorption zugleich ein nicht zu hohes Eigengewicht in den Reifen einbringen, sodass die Rollwiderstandseigenschaften des Reifens nicht unnötig verschlechtert werden.
Das poröse Material, aus dem das Dämpfungselement ausgebildet ist, ist beispielsweise ausgewählt aus der Gruppe enthaltend Polyurethan, insbesondere Polyurethanschäume auf einer Polyetherbasis und/oder Polyurethanschäume auf einer Polyesterbasis mit einer Dichte von 18 bis 300 kg/m³, bevorzugt 30 bis 35 kg/m³, und einer Härte von 6,5 kilo-pascal, Polyester mit einer Dichte von 18 bis 300 kg/m³ bevorzugt 30 bis 35 kg/m³, und einer Härte von 6,5 kilo-pascal, Polyether, sowie beliebige poröse, schallabsorbierende Materialienmischungen, wie beispielsweise Glas- oder Steinwolle, Schlingenware oder Hochflor oder Vliesmaterialien oder Kork. Weitere mögliche poröse Materialien, die sich für die Nutzung als Dämpfungselement eignen, sind beispielsweise ein Melaminharzschaum oder ein Bauschaum.

Besonders bevorzugt enthält der Geräuschabsorber, bevorzugt wenigstens ein poröses Dämpfungselement, wenigstens ein Polyurethan. Polyurethan ist aufgrund seiner spezifischen Dichte und sonstigen Materialbeschaffenheit sowie Verfügbarkeit besonders geeignet.

Gemäß einer besonders vorteilhaften Ausführungsform ist das poröse Dämpfungselement ein in Umlaufrichtung geschlossener oder geöffneter schallabsorbierender Schaumstoffring. Dieser sorgt für eine gleichmäßige Schallabsorption und der Reifen behält seine Gleichförmigkeit. Der Ring kann dabei in Umlaufrichtung geschlossen sein oder in geöffneter Form als Streifen vorliegen, wobei sich die Enden des Streifens berühren können aber nicht müssen oder aber auch überlappen können.
Der Schaumstoff des Schaumstoffringes ist bevorzugt ein offenzelliger Schaumstoff, da dieser am besten dazu geeignet ist, Schall zu absorbieren.

Besonderes bevorzugt ist der Geräuschabsorber ein geschlossener schallabsorbierender Schaumstoffring aus Polyurethan, dabei besonders bevorzugt ein Polyurethanschaum auf Polyetherbasis.
Derartige Schäume sind dem Fachmann bekannt.

Darüber hinaus kann der Geräuschabsorber bzw. die Geräuschabsorber eine beliebige Form aufweisen, wie. z.B. einzelne Elemente in Form von Blöcken, Streifen oder ähnlichem, die beliebig miteinander kombiniert werden können.

Im Folgenden werden die Bestandteile des Klebemittels näher ausgeführt. Sämtliche Ausführungen gelten für das Klebemittel des erfindungsgemäßen Fahrzeugluftreifens und die erfindungsgemäße Klebemittelzusammensetzung bzw. kurz das erfindungsgemäße Klebemittel.

Das Klebemittel enthält erfindungsgemäß die folgenden Bestandteile:
- 10 bis 80 Gew.-% wenigstens eines Kautschuks, wobei 80 bis 100 phr regenerierter Kautschuk sind, und
- 11 bis 80 Gew.-% wenigstens eines Polyolefins, und
- 2 bis 20 Gew.-% wenigstens eines Kohlenwasserstoffharzes.

Der Kautschuk ist bevorzugt ausgewählt aus der Gruppe bestehend aus Naturkautschuk (NR), synthetischem Polyisopren (IR), Butadien-Kautschuk (BR), Styrol-Butadien-Kautschuk (SBR), Butyl-Kautschuk (IIR) und Halobutyl-Kautschuk. Derartige Kautschuke finden insbesondere in Fahrzeugreifen Verwendung und sind mit den Bauteilen des Fahrzeugluftreifens sowie den in dem Klebemittel enthaltenen sonstigen Bestandteilen kompatibel. Somit können insbesondere Altreifen über einen Recyclingprozess erfindungsgemäß wieder Verwendung finden.

Durch den hohen Anteil an regeneriertem Kautschuk von 80 bis 100 phr stellt regenerierter Kautschuk den Hauptanteil (80 phr bis kleiner 100 phr) oder den alleinigen (100 phr) Anteil an Kautschuken dar.
Hierdurch sind das erfindungsgemäße Klebemittel und damit auch der erfindungsgemäße Fahrzeugluftreifen in hohem Maße hinsichtlich ökologischen und ökonomischen Gesichtspunkten optimiert. Ferner lässt sich der erfindungsgemäße Fahrzeugluftreifen einfacher herstellen, da das Klebemittel durch die Verwendung von regeneriertem Kautschuk aufgrund der geringeren Elastizität im Vergleich zu Rohkautschuken besser prozessierbar ist.

Gemäß einer besonders vorteilhaften Ausführungsform der Erfindung umfasst der Kautschuk 90 bis 100 phr, bevorzugt 100 phr regenerierte Kautschuke. Wie oben ausgeführt sind regenerierter Kautschuk oder regenerierte Kautschuke im Falle von wenigstens zwei verschiedenen Kautschuken bei 100 phr die einzigen Kautschuke, d. h., dass dann 0 phr Rohkautschuk zugesetzt sind.

Bei dem Kautschuk kann es sich prinzipiell um jeglichen dem Fachmann bekannten Kautschuk handeln.
Für den Fall, dass das Klebemittel zwei oder mehrere verschiedene Kautschuke enthält, beträgt die Gesamtmenge 10 bis 80 Gew.-% bzw. sind die Mengenangaben auf die Gesamtmenge an enthaltenen Kautschuken bezogen, sofern nichts anderes angegeben ist.
Gemäß einer bevorzugten Ausführungsform der Erfindung handelt es sich um wenigstens einen Dienkautschuk.
Bevorzugt enthält das Klebemittel somit 10 bis 80 Gew.-% wenigstens eines Dienkautschuks.
Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen. Der wenigstens eine Dienkautschuk ist dabei bevorzugt ausgewählt aus der Gruppe bestehend aus natürlichem Polyisopren (Naturkautschuk, NR), synthetischem Polyisopren (IR), epoxidiertem Polyisopren, Butadien-Kautschuk (Polybutadien, BR), Butadien-Isopren-Kautschuk, lösungspolymerisiertem Styrol-Butadien-Kautschuk (SSBR), emulsionspolymerisiertem Styrol-Butadien-Kautschuk (ESBR), Styrol-Isopren-Kautschuk, Flüssigkautschuken mit einem Gewichtsmittel des Molekulargewichts Mw gemäß GPC von größer als 20000 g/mol, Halobutyl-Kautschuk, Polynorbornen, Isopren-Isobutylen-Copolymer, Ethylen-Propylen-DienKautschuk, Nitril-Kautschuk, Chloropren-Kautschuk, Acrylat-Kautschuk, FluorKautschuk, Silikon-Kautschuk, Polysulfid-Kautschuk, Epichlorhydrin-Kautschuk, Styrol-Isopren-Butadien-Terpolymer, hydriertem Acrylnitrilbutadien-Kautschuk und hydriertem Styrol-Butadien-Kautschuk.

Gemäß einer besonders vorteilhaften Ausführungsform der Erfindung ist der Kautschuk ausgewählt aus der Gruppe bestehend aus Naturkautschuk (NR), synthetisches Polyisopren (IR), Butadien-Kautschuk (BR), Styrol-Butadien-Kautschuk (SBR), Butyl-Kautschuk (IIR) und Halobutyl-Kautschuk. Derartige Kautschuke finden in Bauteilen von Fahrzeugreifen Verwendung und sind daher besonders kompatibel mit den an das Klebemittel angrenzenden Bauteilen.

Gemäß einer besonders vorteilhaften Ausführungsform der Erfindung umfasst der Kautschuk 80 bis 100 phr, bevorzugt 90 bis 100 phr, ganz besonders bevorzugt 100 phr, regenerierten Butyl-Kautschuk (IIR) und/oder regenerierten Halobutyl-Kautschuk, besonders bevorzugt regenerierten Butyl-Kautschuk (IIR). Butyl-Kautschuk (IIR) und/oder Halobutyl-Kautschuk zeichnen sich durch eine besonders gute Luftdichtigkeit aus und sind im Klebemittel, welches unmittelbar mit der luftdicht ausgeführten Innenschicht in Berührung kommt, somit besonders gut geeignet. Zudem trägt Butylkautschuk und/oder Halobutyl-Kautschuk dazu bei, dass das Klebemittel die für die beschriebene Anwendung geeignete Viskosität aufweist.

Bei dem Butylkautschuk und/oder Halobutyl-Kautschuk kann es sich um jeden dem Fachmann bekannten Butylkautschuk handeln.

Gemäß einer bevorzugten Ausführungsform der Erfindung beträgt die Menge des wenigstens einen regenerierten Butylkautschuks 20 bis 40 Gew.-%, besonders bevorzugt 20 bis 38 Gew.-%, wiederum besonders bevorzugt 20 bis 28 Gew.-%, ganz besonders bevorzugt 23 bis 28 Gew.-%. Hier sind die Angaben in Gew.-% bezogen auf die Gesamtmenge an Klebemittel.
Mit diesen bevorzugten Ausführungsformen ist die Viskosität und Klebrigkeit des Klebemittels weiter optimiert.

Gemäß einer weiteren bevorzugten Ausführungsform der Erfindung beträgt die Menge des wenigstens einen regenerierten Butylkautschuks 51 bis 80 Gew.-%. Hier sind die Angaben in Gew.-% bezogen auf die Gesamtmenge an Klebemittel.

An dieser Stelle wird betont, dass das Klebemittel nicht die üblicherweise vorhandene Innenschicht des Fahrzeugluftreifens ersetzt. Stattdessen weist der erfindungsgemäße Fahrzeugluftreifen alle sonstigen Komponenten (also Laufstreifen, Seitenwand, Karkasslage, Gürtel, Innenschicht etc.) wie im Stand der Technik bekannt auf.
Gemäß einer besonders bevorzugten Ausführungsform der Erfindung weist der Fahrzeugluftreifen eine Innenschicht (Innerliner) auf, die wenigstens einen Halo-Butylkautschuk und/oder wenigstens einen Butylkautschuk enthält, wobei das Klebemittel enthaltend die oben genannten Bestandteile im Reifeninneren auf der nach radial innen gerichteten Oberfläche der Innenschicht zur Befestigung des Geräuschabsorbers haftet.

Gemäß einer weiteren vorteilhaften Ausführungsform der Erfindung enthält das Klebemittel 10 bis 80 Gew.-% wenigstens eines Kautschuks, wobei der Kautschuk ausgewählt ist aus der Gruppe bestehend aus Naturkautschuk (NR), synthetisches Polyisopren (IR), Butadien-Kautschuk (BR), Styrol-Butadien-Kautschuk (SBR) und Halobutyl-Kautschuk.

Gemäß einer bevorzugten Ausführungsform der Erfindung beträgt dabei die Menge des wenigstens einen Kautschuks 30 bis 60 Gew.-%, bevorzugt 40 bis 55 Gew.-%, besonders bevorzugt 45 bis 50 Gew.-%.
Gemäß einer weiteren bevorzugten Ausführungsform der Erfindung beträgt die Menge des wenigstens eines Kautschuks dabei bis zu 80 Gew.-%, insbesondere 60 bis 80 Gew.-%.

Gemäß einer weiteren bevorzugten Ausführungsform der Erfindung enthält das Klebemittel wenigstens einen Butylkautschuk und wenigstens einen Kautschuk, der ausgewählt ist aus der Gruppe bestehend aus Naturkautschuk (NR), synthetisches Polyisopren (IR), Butadien-Kautschuk (BR), Styrol-Butadien-Kautschuk (SBR) und Halobutyl-Kautschuk, wobei die Gesamtmenge 10 bis 80 Gew.-% beträgt.
Hierbei sind sämtliche Mengenverhältnisse an Butyl-Kautschuk zu übrigem Kautschuk denkbar. Gemäß einer vorteilhaften Weiterbildung der Erfindung sind bezogen auf die Gesamtmenge an enthaltenen Kautschuken davon 50 bis 99 Gew.-% Kautschuke ausgewählt aus der Gruppe bestehend aus Naturkautschuk (NR), synthetisches Polyisopren (IR), Butadien-Kautschuk (BR), Styrol-Butadien-Kautschuk (SBR) und Halobutyl-Kautschuk und 1 bis 50 Gew.-% wenigstens eines Butyl-Kautschukes.

Gemäß vorliegender Erfindung enthält das Klebemittel 11 bis 80 Gew.-% wenigstens eines Polyolefins. Bevorzugt beträgt die Menge des wenigstens einen Polyolefins 31 bis 80 Gew.-%, besonders bevorzugt 35 bis 70 Gew.-%, wiederum besonders bevorzugt 35 bis 60 Gew.-%, ganz besonders bevorzugt 35 bis 57 Gew.-%. Mit derartigen Mengen werden ein optimales Fließverhalten und eine optimale Klebrigkeit bei einer gleichzeitig guten Herstellbarkeit (Prozessierbarkeit) des Klebemittels erzielt.

Das wenigstens eine Polyolefin weist bevorzugt ein Zahlenmittel der Molekulargewichtsverteilung Mn gemäß GPC von 0,1 bis 5 kg/mol, besonders bevorzugt 0,4 bis 1,6 kg/mol, ganz besonders bevorzugt 0,4 bis 1,4 kg/mol, wiederum bevorzugt 1 bis 1,4 kg/mol, wiederum besonders bevorzugt 1,1 bis 1,4 kg/mol, beispielsweise 1,3 kg/mol, auf.
Ein Polyolefin mit den genannten Bereichen für das Mn ist besonders geeignet, um die gewünschte Fließfähigkeit bei gleichzeitig starker Klebrigkeit des Klebemittels zu erzeugen.
Hierbei ist es besonders bevorzugt, dass das wenigstens eine Polyolefin wenigstens ein Polybuten ist.
Polybuten ist besonders geeignet, um die gewünschten Eigenschaften des Klebemittels einzustellen. Für das wenigstens eine Polybuten gelten insbesondere die oben genannten bevorzugten, besonders bevorzugten usw. Zahlenmittel der Molekulargewichtsverteilung Mn.
Derartige Polybutene sind im Handel erhältlich.

Gemäß einer besonders vorteilhaften Weiterbildung der Erfindung weist das wenigstens eine Polyolefin einen Chlorgehalt von kleiner oder gleich 5 mg/kg, bevorzugt kleiner oder gleich 3 mg/kg, auf. Die Angabe bezieht sich auf mg Chlor pro einem kg des Polyolefins. In einer bevorzugten Ausführungsform der Erfindung enthält das Klebemittel wenigstens ein Polyolefin mit einem Chlorgehalt von kleiner oder gleich 1,5 mg/kg, besonders bevorzugt kleiner als 1 mg/kg. Bevorzugt ist das Polyolefin hierbei ein Polybuten.
Gemäß einer besonders bevorzugten Ausführungsform der Erfindung enthält das Klebemittel somit wenigstens ein Polybuten mit einem Chlorgehalt von kleiner oder gleich 5 mg/kg, bevorzugt kleiner oder gleich 3 mg/kg, besonders bevorzugt kleiner als 1 mg/kg. Geeignete Polybutene, auch Polyisobutene genannt, sind beispielsweise unter den Handelsnamen Glissopal® der Firma BASF bekannt. Insbesondere geeignet sind hierbei Glissopal® V-500, V-640 oder V-190.
Mit einem derartigen (nahezu) chlorfreien Polybuten kann insbesondere ein Geräuschabsorber aus Schaumstoff, bevorzugt Polyurethan (PU), eingesetzt werden, wobei das chlorfreie Polybuten besonders kompatibel mit dem (PU-)Schaumstoff ist und keine oder kaum Zersetzungsprozesse stattfinden.

Das Klebemittel enthält erfindungsgemäß 2 bis 20 Gew.-% wenigstens eines Kohlenwasserstoffharzes. Bevorzugt beträgt die Menge des wenigstens einen Kohlenwasserstoffharzes 5 bis 10 Gew.-%, besonders bevorzugt 5 bis 8 Gew.-%, ganz besonders bevorzugt 5 bis 6,5 Gew.-%.
Mit derartigen bevorzugten und besonders bevorzugten Mengen werden die Klebrigkeit und die Viskosität des Klebemittels weiter optimiert.

Dem Fachmann ist klar, dass Kohlenwasserstoffharze Polymere sind, die aus Monomeren aufgebaut sind, wobei das Kohlenwasserstoffharz durch die

Verknüpfung der Monomere zueinander formal aus Derivaten der Monomere aufgebaut ist.
Der Begriff "Kohlenwasserstoffharze" umfasst im Rahmen der vorliegenden Anmeldung Harze, die Kohlenstoffatome und Wasserstoffatome aufweisen sowie optional Heteroatome, wie insbesondere Sauerstoffatome, aufweisen können.

Das Kohlenwasserstoffharz kann ein Homopolymer oder ein Copolymer sein. Unter Homopolymer wird in der vorliegenden Anmeldung ein Polymer verstanden, welches gemäß Römpp Online (Auszug vom 02.01.2017, letzte Aktualisierung des Artikels August 2008) "aus Monomeren nur einer Art entstanden ist".
Unter Copolymer wird im Rahmen der vorliegenden Erfindung ein Polymer verstanden, welches aus mehreren, d.h. zwei oder mehr, verschiedenen Monomeren aufgebaut ist. Im Rahmen der vorliegenden Erfindung kann das Kohlenwasserstoffharz daher z.B. auch ein Copolymer aus drei verschiedenen Monomeren sein.

Bei den Monomeren kann es sich um alle dem Fachmann bekannten Monomere von Kohlenwasserstoffharzen handeln, wie aliphatische Monomere, insbesondere aliphatische C₅-Monomere, weitere ungesättigte Verbindungen, die kationisch polymerisiert werden können, enthaltend Aromaten und/oder Terpene und/oder Alkene und/oder Cycloalkene.
Bevorzugte Monomere sind insbesondere C₅ und C₉-Monomere.

Bei den Aromaten (aromatische Monomere) kann es sich beispielsweise um alpha-Methylstyrol und/oder Styrol und/oder Vinyltoluol und/oder Inden und/oder Cumaron und/oder Methylinden und/oder Methylcumaron und/oder Phenol handeln. Bevorzugt handelt es sich bei den aromatischen Monomeren um alpha-Methylstyrol und/oder Styrol und/oder Vinyltoluol und/oder Inden und/oder Cumaron und/oder Methylinden und/oder Methylcumaron.
Gemäß einer bevorzugten Ausführungsform der Erfindung umfasst das wenigstens eine Kohlenwasserstoffharz kein phenolisches Kohlenwasserstoffharz, bzw. basiert das wenigstens eine Kohlenwasserstoffharz bevorzugt nicht auf Phenol als Monomer. Im Falle eines Gemisches aus wenigsten zwei Kohlenwasserstoffharzen basiert somit bevorzugt keines auf Phenol als Monomer. Das Klebemittel ist somit gemäß einer bevorzugten Ausführungsform der Erfindung frei von Phenolharzen, d. h. enthält 0 bis 0,1 Gew.-%, idealerweise 0 Gew.-% Phenolharze.

Gemäß Römpp Online ist der Begriff "Olefine" die "Gruppenbezeichnung für acyclische und cyclische aliphatische Kohlenwasserstoffe mit einer oder mehreren reaktiven C=C-Doppelbindungen im Molekül, die heute besser als Alkene bzw. Cycloalkene bezeichnet werden, in weiterem Sinne auch Bezeichnung für deren substituierte Derivate...." Im Rahmen der vorliegenden Erfindung werden daher ungesättigte Terpene, Alkene und Cycloalkene unter den Oberbegriff Olefine zusammengefasst.
Bei den Alkenen kann es sich beispielsweise um 1-Buten und/oder 2-Buten und/oder Butadien handeln.

Gemäß einer bevorzugten Ausführungsform der Erfindung handelt es sich bei dem Kohlenwasserstoffharz um wenigstens ein aliphatisches Harz, also ein Harz welches keine aromatischen Ringsysteme enthält. Ein derartiges Harz besteht zu 100 Gew.-% aus aliphatischen Monomeren bzw. dessen Derivaten.
Gemäß einer weiteren Ausführungsform der Erfindung besteht das Harz zu 10 bis 99 Gew.-%, bevorzugt 50 bis 99 Gew.-%, besonders bevorzugt 70 bis 99 Gew.-%, aus aliphatischen und zu 1 bis 90 Gew.-%, bevorzugt 1 bis 50 Gew.-%, besonders bevorzugt 1 bis 30 Gew.-% aus aromatischen Monomeren.

Gemäß einer besonders bevorzugten Ausführungsform der Erfindung handelt es sich bei dem Kohlenwasserstoffharz um wenigstens ein Harz, welches wenigstens aus C₅-Monomeren aufgebaut ist und dem Fachmann als sogenanntes C₅-Harz bekannt ist. Hiermit werden besonders gute Eigenschaften des Klebemittels, insbesondere ein optimiertes Fließverhalten bei gleichzeitig guter Klebrigkeit, erzielt.

Bei den aliphatischen C₅-Monomeren kann es sich um Monomere der C₅-Erdölfraktion, z.B. Isopren, und/oder Monomere der Terpene und/oder Cycloolefine und/oder Olefine, wie z.B. Penten, handeln. Unter C₅ ist zu verstehen, dass diese Monomere aus fünf Kohlenstoffatomen aufgebaut sind.
Ferner ist dem Fachmann bekannt, dass die Cs-Erdölfraktion außer aliphatischen Monomeren mit fünf Kohlenstoffatomen andere aliphatische Monomere (Bausteine) mit z.B. vier, also C₄-Monomere, oder sechs Kohlenstoffatomen, C₆-Monomere, enthalten kann.

Gemäß einer vorteilhaften Ausführungsform der Erfindung enthält das Klebemittel 1 bis 50 Gew.-% wenigstens eines Füllstoffs, wodurch die Viskosität des Klebemittels optimal eingestellt werden kann. Die Menge des wenigstens einen Füllstoffs beträgt hierzu besonders bevorzugt 1 bis 35 Gew.-%, wiederum besonders bevorzugt 5 bis 35 Gew.-%, ganz besonders bevorzugt 5 bis 20 Gew.-%, und dabei insbesondere besonders bevorzugt 5 bis 15 Gew.-%, wiederum insbesondere besonders bevorzugt 5 bis 10 Gew.-%, bezogen auf die Gesamtmenge an Klebemittel.
Bei dem Füllstoff kann es sich um alle dem Fachmann bekannten Füllstoffe handeln, wie insbesondere verstärkende Füllstoffe, wie Ruß und/oder Kieselsäure, wobei insbesondere gefällte Kieselsäuren gemeint und bevorzugt sind, die als Füllstoffe für Reifenkautschukmischungen bekannt sind.

Ferner sind weitere verstärkende und nicht verstärkende Füllstoffe, insbesondere Siliziumoxid basierte Füllstoffe, wie Silikate oder Sand, denkbar.

Zu den weiteren nicht verstärkenden Füllstoffen zählen im Rahmen der vorliegenden Erfindung Alumosilicate, Sand, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern)
Weitere ggf. verstärkende Füllstoffe sind z.B. Graphit und Graphene und sogenannte "carbon-silica dual-phase filler".

Gemäß einer bevorzugten Ausführungsform der Erfindung umfasst der Füllstoff wenigstens einen Ruß. Dies hat den Vorteil, dass die Kohäsion des Klebemittels erhöht und die Klebrigkeit des Klebemittels während des Herstellverfahrens erniedrigt wird. Gleichzeitig werden die Ortsfestigkeit und die Reißeigenschaften des Klebemittels verbessert.
Als Ruße sind im Rahmen der vorliegenden Erfindung prinzipiell alle dem Fachmann bekannten Ruß-Typen denkbar.
Gemäß einer vorteilhaften Ausführungsform der Erfindung wird ein Ruß eingesetzt, der eine Jodadsorptionszahl gemäß ASTM D 1510 von 20 bis 180 g/kg, besonders bevorzugt 30 bis 140 g/kg, und eine DBP-Zahl gemäß ASTM D 2414 von 30 bis 200 ml/100 g, bevorzugt 90 bis 180 ml/100g, besonders bevorzugt 110 bis 180 ml/100g, aufweist.
Gemäß einer weiteren bevorzugten Ausführungsform der Erfindung wird ein Ruß des Typs N326 verwendet.
Es ist auch ein Gemisch von zwei oder mehreren Rußen denkbar.

Gemäß einer weiteren bevorzugten Ausführungsform der Erfindung umfasst der Füllstoff wenigstens eine Kieselsäure (engl. "silica").
Hierdurch wird eine optimale Verstärkung des Klebemittels erzielt und eine gute Viskositätskontrolle und -einstellung ermöglicht. Zudem wird mit wenigstens einer Kieselsäure die Kohäsion des Klebemittels erhöht und die Klebrigkeit des Klebemittels während des Herstellverfahrens erniedrigt wird. Gleichzeitig werden die Ortsfestigkeit und die Reißeigenschaften des Klebemittels verbessert.
Es ist auch ein Gemisch von zwei oder mehreren Kieselsäuren denkbar.
Bei den Kieselsäuren kann es sich um die dem Fachmann bekannten Kieselsäuren, die als Füllstoff für Reifenkautschukmischungen geeignet sind, handeln. Als Kieselsäuren können somit z. B. sowohl jene des Typs Ultrasil® VN3 (Handelsname) der Firma Evonik als auch Kieselsäuren mit einer vergleichsweise niedrigen BET-Oberfläche (wie z. B. Zeosil® 1115 oder Zeosil® 1085 der Firma Solvay) als auch hoch dispergierbare Kieselsäuren, so genannte HD-Kieselsäuren (z. B. Zeosil® 1165 MP der Firma Solvay) verwendet werden.

Ferner ist ein Gemisch der genannten Füllstoffe denkbar und bevorzugt, wie insbesondere wenigstens ein Ruß in Kombination mit wenigstens einer Kieselsäure, wobei sich ebenfalls die genannten Vorteile ergeben.

Gemäß einer besonders vorteilhaften Ausführungsform der Erfindung ist das Klebemittel frei von peroxidischen Verbindungen, d. h. es enthält gemäß dieser Ausführungsform 0 bis 0,001 Gew.-%, idealerweise 0 Gew.-% derartiger Verbindungen, wobei sich die Mengenangabe auf jede Substanz einzeln bezieht.

Gemäß einer besonders vorteilhaften Ausführungsform der Erfindung ist das Klebemittel frei Vulkanisationsagenzien und Metalloxiden, d. h. es enthält gemäß dieser Ausführungsform 0 bis 0,001 Gew.-%, idealerweise 0 Gew.-% derartiger Verbindungen, wobei sich die Mengenangabe auf jede Substanz einzeln bezieht.

Somit enthält das Klebemittel besonders bevorzugt keine Substanzen, die zu einer Vernetzung des Klebemittels führen würden und in aus dem Stand der Technik bekannten Dichtmitteln enthalten sind. Das Klebemittel ist somit im Vergleich zu Dichtmitteln als Befestigungsmittel für Geräuschabsorber vergleichsweise einfach und kostengünstig zusammengesetzt und weist zudem eine optimierte Viskosität auf.

Typische Substanzen, die gemäß dieser bevorzugten Ausführungsformen der Erfindung nicht oder nur in den jeweiligen Mengen enthalten sind, sind:
von 0 bis 0,001 Gew.-% Peroxide, z. B. Dibenzoylperoxid
und bevorzugt dabei zudem:
   von 0 bis 0,001 Gew.-% Zinkoxid,
   von 0 bis 0,001 Gew.-% Chinone, z. B. Chinondioxim,

Das Klebemittel kann ferner weitere Bestandteile enthalten. wie insbesondere Weichmacher, wie z. B. Öl(e).
Gemäß einer bevorzugten Ausführungsform der Erfindung enthält das Klebemittel 0,2 bis 12 Gew.-% wenigstens eines Weichmachers, wobei es insbesondere und bevorzugt ein Gemisch von zwei verschiedenen Weichmachern enthält.
Durch die Verwendung von 0,2 bis 12 Gew.-%, bevorzugt 2 bis 6 Gew.-%, wenigstens eines Weichmachers wird eine gute Verarbeitbarkeit und eine weiter optimierte Viskosität des Klebemittels erzielt.
Bei den Weichmachern kann es sich um alle dem Fachmann bekannten Weichmacher, insbesondere Öle, handeln, wie insbesondere aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346. Mineralöle sind als Weichmacher besonders bevorzugt.
Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Gemäß einer bevorzugten Ausführungsform der Erfindung besteht das Klebemittel aus Kautschuk, Polyolefin, Kohlenwasserstoffharz, Füllstoff und Weichmacher, wobei die obigen Ausführungen zu Art und Menge der jeweiligen Substanzen gelten. Insbesondere besteht das Klebemittel gemäß einer bevorzugten Ausführungsform der Erfindung aus
- 10 bis 80 Gew.-% wenigstens eines Kautschuks, wobei 80 bis 100 phr regenerierte Kautschuke sind und der Kautschuk bevorzugt ausgewählt ist aus der Gruppe bestehend aus Naturkautschuk (NR), synthetischem Polyisopren (IR), Butadien-Kautschuk (BR), Styrol-Butadien-Kautschuk (SBR), Butyl-Kautschuk (IIR) und Halobutyl-Kautschuk, und
- 11 bis 80 Gew.-% wenigstens eines Polyolefins, und
- 2 bis 20 Gew.-% wenigstens eines Kohlenwasserstoffharzes, und
- 1 bis 50 Gew.-% wenigstens eines Füllstoffs, und
- 0,2 bis 12 Gew.-% wenigstens eines Weichmachers.

Hierbei ergibt die Summe der genannten Bestandteile immer 100 Gew.-%.
Ein derartiges Klebemittel ist besonders hinsichtlich Verarbeitbarkeit, Fließverhalten und Ortsfestigkeit optimiert. Es weist zudem aufgrund der Zusammensetzung eine optimale Klebrigkeit auf.

Gemäß einer weiteren bevorzugten Ausführungsform der Erfindung besteht das Klebemittel aus regeneriertem Butylkautschuk, Polyolefin, Kohlenwasserstoffharz, Füllstoff und Weichmacher, wobei die obigen Ausführungen zu Art und Menge der jeweiligen Substanzen gelten.
Insbesondere besteht das Klebemittel gemäß einer bevorzugten Ausführungsform der Erfindung aus
- 10 bis 80 Gew.-% wenigstens eines regenerierten Butylkautschuks und 0 phr weitere Kautschuke, und
- 11 bis 80 Gew.-% wenigstens eines Polyolefins, und
- 2 bis 20 Gew.-% wenigstens eines Kohlenwasserstoffharzes, und
- 1 bis 50 Gew.-% wenigstens eines Füllstoffs, und
- 0,2 bis 12 Gew.-% wenigstens eines Weichmachers.
Gemäß einer weiteren bevorzugten Ausführungsform der Erfindung besteht das Klebemittel aus Kautschuk, Polyolefin, Kohlenwasserstoffharz, Füllstoff und Weichmacher, wobei die obigen Ausführungen zu Art und Menge der jeweiligen Substanzen gelten.

Das Klebemittel wird insbesondere durch - bevorzugt intensives - Vermischen der Substanzen hergestellt, wobei dies in einer oder mehreren Mischstufen erfolgen kann. Hierbei können die dem Fachmann bekannten Mischvorrichtungen, wie Innenmischer und/oder Extruder, verwendet werden. Auch die Mischdauer und Mischtemperatur können je nach Zusammensetzung und Viskosität des Klebemittels eingestellt werden.
Beispielsweise kann das Klebemittel auch in einem Extruder, bevorzugt einem Doppelschneckenextruder, hergestellt werden.
Ferner ist es denkbar, dass das Klebemittel zur - bevorzugt zwischenzeitlichen - Verringerung der Viskosität unter Zuhilfenahme von Lösungsmitteln gemischt wird.

Das Klebemittel kann auf jede dem Fachmann bekannte Weise auf die Reifeninnenfläche, insbesondere der dem Laufstreifen gegenüberliegenden Fläche aufgebracht werden.
Bevorzugt wird es durch Aufsprühen oder mit einer Hochdruckpumpe aufgebracht.

Das Klebemittel wird bevorzugt mit einer Schichtdicke (in radialer Richtung) von 0,05 bis 10 mm aufgetragen, wobei sich in axialer Richtung herstellungsbedingte Schwankungen ergeben können. Das Klebemittel kann dabei vollflächig oder nur in bestimmten Bereichen aufgebracht werden.

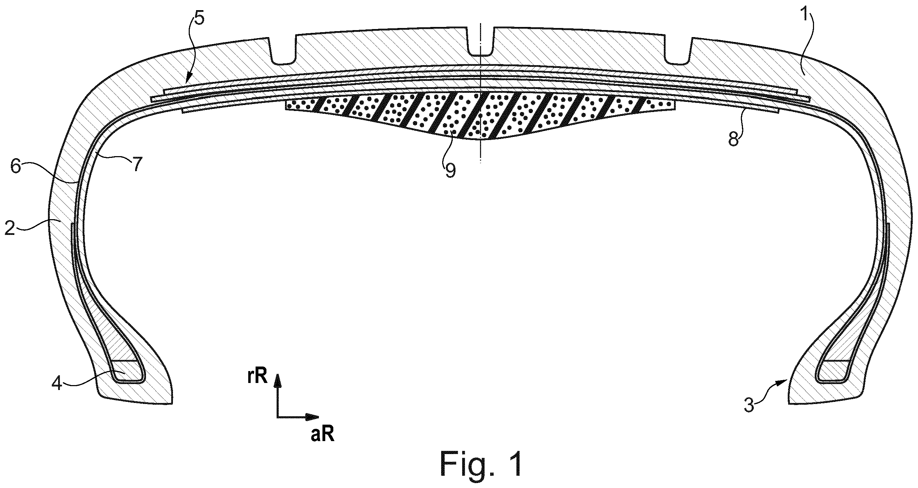

Im Folgenden soll die Erfindung anhand eines Ausführungsbeispiels näher erläutert werden. Ein Beispiel eines erfindungsgemäßen Fahrzeugluftreifens ist in Figur 1 gezeigt.

In Fig. 1 ist ein Querschnitt durch einen PKW-Radialreifen dargestellt, welcher einen profilierten Laufstreifen 1, Seitenwände 2, Wulstbereiche 3, Wulstkerne 4 sowie einen mehrlagigen Gürtelverband 5 und eine Karkasseinlage 6 aufweist. An seiner inneren Fläche ist der Reifen mit einer Innenschicht 7 aus einer luftdicht ausgeführten Gummimischung bedeckt. An der dem Laufstreifen 1 gegenüberliegenden inneren Oberfläche der Innenschicht 7 ist nachträglich (beim fertigen Reifen) ein Klebemittel 8 aufgebracht.

Das Klebemittel 8 besteht gemäß einem ersten Beispiel aus folgenden Substanzen:
27,3 Gew.-% regeneriertem Butylkautschuk,
55,8 Gew.-% Polybuten mit einem Mn von 1300 g/mol,
5,3 Gew.-% aliphatisches Kohlenwasserstoffharz (C₅-Harz),
8,4 Gew.-% Ruß N326 als Füllstoff,
3,2 Gew.-% Mineralölweichmacher.

Das Klebemittel 8 enthält gemäß einem weiteren Beispiel folgende Substanzen:
48 Gew.-% regeneriertem Butylkautschuk,
35,1 Gew.-% Polybuten mit einem Mn von 1300 g/mol,
5,3 Gew.-% aliphatisches Kohlenwasserstoffharz (C₅-Harz),
8,4 Gew.-% Ruß N326 als Füllstoff,
3,2 Gew.-% Mineralölweichmacher.

Durch die Verwendung von regeneriertem Butylkautschuk sind das Klebemittel und damit der Fahrzeugluftreifen ökologisch und ökonomisch optimiert. Gleichzeitig trägt das Klebemittel aufgrund des Butylkautschuks zur Luftdichtigkeit bei.
Die genannten Klebemittel weisen beispielsweise eine komplexe Viskosität bei 120 °C (0,02 Hz, Frequenzdurchlauf, Platte-Platte-Rheometer) von 2700 Pas (Pascal mal Sekunde) auf und sind somit besonders hinsichtlich Verarbeitbarkeit, Fließverhalten, Ortsfestigkeit optimiert. Sie weisen zudem aufgrund der Zusammensetzungen eine optimale Klebrigkeit auf.

Am Klebemittel 8 haftet ein schallabsorbierender Schaumstoffring als Geräuschabsorber 9, welcher unmittelbar nach dem Aufbringen des Klebemittels 8 aufgepresst wird, wie nachfolgend beschrieben wird. Der schallabsorbierende Schaumstoffring ist bezüglich seiner schallabsorbierenden Eigenschaften auf die Reifenhohlraumfrequenz abgestimmt. Der Geräuschabsorber 9 in Form eines Schaumstoffrings weist beispielsweise hier einen etwa langgestreckt dreieckförmigen, bezüglich des Reifenäquators symmetrischen Querschnitt auf.

Der Schaumstoff des Schaumstoffringes ist ein offenzelliger Schaumstoff, da dieser am besten dazu geeignet ist, Schall zu absorbieren. Der Schaumstoff umfasst beispielsweise Polyurethan.
Das Klebemittel wird, beispielsweise durch Aufsprühen, derart eingebracht, dass es zumindest die dem Laufstreifen 1 gegenüberliegende innere Oberfläche oder nur Teile davon bedeckt. Zur optimalen Verteilung des Klebemittels an der Innenfläche kann der Reifen in Rotation versetzt werden. Das Klebemittel wird ferner in einer solchen Menge eingebracht, dass die Dicke bzw. Schichtdicke des Klebemittels zwischen 0,05 mm und 10 mm beträgt. Zumindest unmittelbar nach dem Aufbringen soll das Klebemittel relativ flüssigsein, um eine optimale Verteilung des Klebemittels über die Oberfläche zu erreichen und zudem klebrig sein. Zu diesem Zeitpunkt wird der vorgefertigte Schaumstoffring in das Innere des Reifens eingebracht und angedrückt. Nach dem Einbringen haftet der Schaumstoffring an dem elastisch deformierbaren, aber weitestgehend ortsfest verbleibenden Klebemittel 8.

### Bezugszeichenliste

- 1: Laufstreifen
- 2: Seitenwand
- 3: Wulstbereich
- 4: Wulstkern
- 5: Gürtelverband
- 6: Karkasseinlage
- 7: Innenschicht
- 8: Klebemittel
- 9: Geräuschabsorber
- rR: radiale Richtung (in Pfeilrichtung von radial innen nach radial außen)
- aR: axiale Richtung

## Patentansprüche

1. Fahrzeugluftreifen mit wenigstens einem in seinem Inneren an der dem Laufstreifen (1) gegenüberliegenden Innenfläche haftend angebrachten Geräuschabsorber (9), wobei der wenigstens eine Geräuschabsorber (9) an einem Klebemittel (8) haftet, **dadurch gekennzeichnet, dass** das Klebemittel (8) folgende Bestandteile enthält:
- 10 bis 80 Gew.-% wenigstens eines Kautschuks, wobei 80 bis 100 phr regenerierter Kautschuk sind; und
- 11 bis 80 Gew.-% wenigstens eines Polyolefins, und
- 2 bis 20 Gew.-% wenigstens eines Kohlenwasserstoffharzes.

2. Fahrzeugluftreifen nach Anspruch 1, **dadurch gekennzeichnet, dass** der Kautschuk ausgewählt ist aus der Gruppe bestehend aus Naturkautschuk (NR), synthetischem Polyisopren (IR), Butadien-Kautschuk (BR), Styrol-Butadien-Kautschuk (SBR), Butyl-Kautschuk (IIR) und Halobutyl-Kautschuk.

3. Fahrzeugluftreifen nach Anspruch 1, **dadurch gekennzeichnet, dass** der Kautschuk 90 bis 100 phr, bevorzugt 100 phr, regenerierten Kautschuk umfasst.

4. Fahrzeugluftreifen nach einem der vorherigen Ansprüche, **dadurch gekennzeichnet, dass** der Kautschuk 80 bis 100 phr, bevorzugt 90 bis 100 phr, besonders bevorzugt 100 phr, regenerierten Butyl-Kautschuk (IIR) und/oder Halobutyl-Kautschuk umfasst.

5. Fahrzeugluftreifen nach einem der vorherigen Ansprüche, **dadurch gekennzeichnet, dass** die Menge des wenigstens einen Kautschuks 30 bis 60 Gew.-%, bevorzugt 40 bis 55 Gew.-%, besonders bevorzugt 45 bis 50 Gew.-%, beträgt.

6. Fahrzeugluftreifen nach Anspruch 1, **dadurch gekennzeichnet, dass** das Klebemittel (8) 1 bis 35 Gew.-% wenigstens eines Füllstoffs enthält.

7. Fahrzeugluftreifen nach einem der vorherigen Ansprüche, **dadurch gekennzeichnet, dass** das Klebemittel frei von Vulkanisationsagenzien, Metalloxiden und peroxidischen Verbindungen ist.

8. Fahrzeugluftreifen nach einem der vorherigen Ansprüche, **dadurch gekennzeichnet, dass** das wenigstens eine Polyolefin wenigstens ein Polybuten ist.

9. Fahrzeugluftreifen nach einem der vorherigen Ansprüche, **dadurch gekennzeichnet, dass** der wenigstens eine Geräuschabsorber (9) wenigstens ein poröses Dämpfungselement ist.

10. Fahrzeugluftreifen nach Anspruch 9, **dadurch gekennzeichnet, dass** das poröse Dämpfungselement ein in Umlaufrichtung geschlossener oder geöffneter schallabsorbierender Schaumstoffring ist.

11. Fahrzeugluftreifen nach einem der vorherigen Ansprüche, **dadurch gekennzeichnet, dass** der Geräuschabsorber wenigstens ein Polyurethan enthält.

12. Klebemittelzusammensetzung zur Befestigung eines Geräuschabsorbers (9) auf einer Fläche eines Fahrzeugluftreifens, **dadurch gekennzeichnet, dass** die Zusammensetzung wenigstens die folgenden Bestandteile enthält:
- 10 bis 80 Gew.-% wenigstens eines Kautschuks, wobei 80 bis 100 phr regenerierter Kautschuk sind, und
- 11 bis 80 Gew.-% wenigstens eines Polyolefins, und
- 2 bis 20 Gew.-% wenigstens eines Kohlenwasserstoffharzes.

## Claims

1. Pneumatic vehicle tyre comprising at least one sound absorber (9) adherently attached to the inner surface opposite the tread (1) in its interior, wherein the at least one sound absorber (9) adheres to an adhesive (8), **characterized in that** the adhesive (8) contains the following constituents:
- 10% to 80% by weight of at least one rubber, wherein 80 to 100 phr are regenerated rubber; and
- 11% to 80% by weight of at least one polyolefin, and
- 2% to 20% by weight of at least one hydrocarbon resin.

2. Pneumatic vehicle tyre according to Claim 1, **characterized in that** the rubber is selected from the group consisting of natural rubber (NR), synthetic polyisoprene (IR), butadiene rubber (BR), styrenebutadiene rubber (SBR), butyl rubber (IiR) and halobutyl rubber.

3. Pneumatic vehicle tyre according to Claim 1, **characterized in that** the rubber comprises 90 to 100 phr, preferably 100 phr, of regenerated rubber.

4. Pneumatic vehicle tyre according to any of the preceding claims, **characterized in that** the rubber comprises 80 to 100 phr, preferably 90 to 100 phr, particularly preferably 100 phr, of regenerated butyl rubber (IIR) and/or halobutyl rubber.

5. Pneumatic vehicle tyre according to any of the preceding claims, **characterized in that** the amount of the at least one rubber is 30% to 60% by weight, preferably 40% to 55% by weight, particularly preferably 45% to 50% by weight.

6. Pneumatic vehicle tyre according to Claim 1, **characterized in that** the adhesive (8) contains 1% to 35% by weight of at least one filler.

7. Pneumatic vehicle tyre according to any of the preceding claims, **characterized in that** the adhesive is free from vulcanizing agents, metal oxides and peroxidic compounds.

8. Pneumatic vehicle tyre according to any of the preceding claims, **characterized in that** the at least one polyolefin is at least one polybutene.

9. Pneumatic vehicle tyre according to any of the preceding claims, **characterized in that** the at least one sound absorber (9) is at least one porous damping element.

10. Pneumatic vehicle tyre according to Claim 9, **characterized in that** the porous damping element is a sound-absorbing foam ring closed or open in the circumferential direction.

11. Pneumatic vehicle tyre according to any of the preceding claims, **characterized in that** the sound absorber contains at least one polyurethane.

12. Adhesive composition for securing a sound absorber (9) to a surface of a pneumatic vehicle tyre, **characterized in that** the composition contains at least the following constituents:
- 10% to 80% by weight of at least one rubber, wherein 80 to 100 phr are regenerated rubber, and
- 11% to 80% by weight of at least one polyolefin, and
- 2% to 20% by weight of at least one hydrocarbon resin.

## Revendications

1. Pneumatique pour véhicule présentant au moins un absorbant sonore (9) appliqué par adhérence à l'intérieur dudit pneumatique sur la surface interne opposée à la bande de roulement (1), ledit au moins un absorbant sonore (9) collant à un adhésif (8), **caractérisé en ce que** l'adhésif (8) contient les constituants suivants :
- 10 à 80% en poids d'au moins un caoutchouc, 80 à 100 pcc étant constituées de caoutchouc régénéré ; et
- 11 à 80% en poids d'au moins une polyoléfine et
- 2 à 20% en poids d'au moins une résine hydrocarbonée.

2. Pneumatique pour véhicule selon la revendication 1, **caractérisé en ce que** le caoutchouc est choisi dans le groupe constitué par le caoutchouc naturel (NR), le polyisoprène de synthèse (IR), le caoutchouc de butadiène (BR), le caoutchouc de styrène-butadiène (SBR), le caoutchouc de butyle (IIR) et le caoutchouc d'halogénobutyle.

3. Pneumatique pour véhicule selon la revendication 1, **caractérisé en ce que** le caoutchouc comprend 90 à 100 pcc, de préférence 100 pcc, de caoutchouc régénéré.

4. Pneumatique pour véhicule selon l'une quelconque des revendications précédentes, **caractérisé en ce que** le caoutchouc comprend 80 à 100 pcc, de préférence 90 à 100 pcc, de manière particulièrement préférée 100 pcc, de caoutchouc de butyle (IIR) et/ou de caoutchouc d'halogénobutyle régénéré.

5. Pneumatique pour véhicule selon l'une quelconque des revendications précédentes, **caractérisé en ce que** la quantité dudit au moins un caoutchouc représente 30 à 60% en poids, de préférence 40 à 55% en poids, de manière particulièrement préférée 45 à 50% en poids.

6. Pneumatique pour véhicule selon la revendication 1, **caractérisé en ce que** l'adhésif (8) contient 1 à 35% en poids d'au moins une charge.

7. Pneumatique pour véhicule selon l'une quelconque des revendications précédentes, **caractérisé en ce que** l'adhésif est exempt d'agents de vulcanisation, d'oxydes métalliques et de composés peroxydes.

8. Pneumatique pour véhicule selon l'une quelconque des revendications précédentes, **caractérisé en ce que** ladite au moins une polyoléfine est au moins un polybutène.

9. Pneumatique pour véhicule selon l'une quelconque des revendications précédentes, **caractérisé en ce que** ledit au moins un absorbant sonore (9) est au moins un élément d'amortissement poreux.

10. Pneumatique pour véhicule selon la revendication 9, **caractérisé en ce que** l'élément d'amortissement poreux est un anneau en mousse absorbant le bruit fermé ou ouvert dans la direction périphérique.

11. Pneumatique pour véhicule selon l'une quelconque des revendications précédentes, **caractérisé en ce que** l'absorbant sonore contient au moins un polyuréthane.

12. Composition adhésive pour la fixation d'un absorbant sonore (9) sur une surface d'un pneumatique pour véhicule, **caractérisée en ce que** la composition contient au moins les constituants suivants :
- 10 à 80% en poids d'au moins un caoutchouc, 80 à 100 pcc étant constituées de caoutchouc régénéré, et
- 11 à 80% en poids d'au moins une polyoléfine et
- 2 à 20% en poids d'au moins une résine hydrocarbonée.
